(19) Europäisches Patentamt
European Patent Office
Office européen des brevets

(11) **EP 2 136 183 A1**

(12) **EUROPEAN PATENT APPLICATION**

(43) Date of publication:
**23.12.2009 Bulletin 2009/52**

(51) Int Cl.:
**G01C 21/34** (2006.01)     **G08G 1/0969** (2006.01)

(21) Application number: **08425427.5**

(22) Date of filing: **17.06.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS** | (72) Inventor: **Zompi, Roberto**<br>**10078 Venaria Reale (TO) (IT)**<br><br>(74) Representative: **Gallarotti, Franco et al**<br>**Buzzi, Notare & Antonielli d'Oulx**<br>**Via Maria Vittoria, 18**<br>**10123 Milano (IT)** |
| (71) Applicant: **Magneti Marelli S.p.A.**<br>**20011 Corbetta (MI) (IT)** | |

(54) **Navigation apparatus for supplying navigation instructions and corresponding navigation method**

(57) An apparatus is described for providing navigation instructions in a motor vehicle, comprising at least one processing module (12) associated with memory means (16) and user interface means (11) configured to supply said navigation instructions (N) on the basis of at least one road route (P; $P_1$... $P_n$; $P_u$) between a first position ($x_1$) and a second position ($x_2$) selected from among one or more routes (P; $P_1$... $P_n$; $P_u$) constructed between said first position ($x_1$) and second position ($x_2$) selecting road route segments ($T_i$) stored in said memory means (16) based on a procedure for minimising a cost associated with one or more routes (P; $P_1$... $P_n$; $P_u$), said memory means (16) comprising stored road route parameters (C, F) employable by said processing module (12) to evaluate information on vehicle fuel or energy consumption associated with said one or more constructed routes (P; $P_1$... $P_n$; $P_u$),

according to the invention, said memory means (16) store said road route parameters (C, F) in a database element (13, 14, 15) comprising road route segments or points ($T_i$), consumption conditions ($C(T_i)$) associated with said segments or points ($T_i$) and respective corresponding consumption penalisation factors ($F(T_i)$),

said processing module (12) is configured to construct said at least one road route (P; $P_1$... $P_n$; $P_u$) between a first position $x_1$ and a second position $x_2$ by a cost minimisation procedure that provides selecting among said segments or points ($T_i$) in said database element (13, 14, 15) the segments or points for constructing the road route (P; $P_1$... $P_n$; $P_u$) minimising a cost determined by the corresponding consumption penalisation factors ($F(T_i)$).

Fig. 1

EP 2 136 183 A1

**Description**

The present invention concerns a apparatus for supplying navigation instructions in a motor vehicle comprising at least one processing module associated with memory means and user interfacing means, configured to supply navigation instructions on the basis of at least one road route between a first position and a second position, selected from among one or more routes between the first position and the second position constructed selecting segments of road routes stored in the memory means on the basis of a procedure for minimising a cost associated with the one or more routes, the memory means comprising stored road route parameters usable by the processing module to evaluate information on motor vehicle fuel or energy consumption associated with the one or more constructed routes.

The cost of fuel or energy (e.g. gasoline, diesel fuel, gas or electric charging) is increasing in recent years augmenting the concerns of drivers regarding the consumption involved in travelling by motor vehicle from a first place to a second place. This is particularly felt in the cases, as in the case of the use of electric batteries, in which the electric charge is consumed in a rather rapid manner due to limited charging capacity, with respect to fuel tanks. In this latter case, instead, considerations on the rising cost of hydrocarbons lead the driver to seek consumption information associated with a motor route.

Systems are known that, in general, can calculate a consumption associated with a determined route on the basis of route mileage and expected vehicle consumption. Such systems are also capable of evaluating the effect, usually based on the average travelling speed, of average traffic on a determined route. However, such systems are not able to adapt precisely to the actual characteristics of the chosen route. Furthermore, such systems have a low capacity to adapt to variations in road conditions, for example varying traffic conditions.

Furthermore, a precise determination of consumption by a motor vehicle is difficult, due to the numerous parameters that contribute to it, for example vehicle conditions (e.g. tyre pressure) that can not always be inserted correctly and efficaciously into calculation models.

The present invention has the object of obtaining a solution for a navigation system that permits calculation of the consumption associated with one or more motor vehicle routes with improved precision and improved capacity for updating according to the travelling conditions detected.

According to the present invention, such object is achieved by means of a system for supplying navigation instructions in a motor vehicle and to a corresponding method, having the characteristics specifically recalled in the annexed claims.

The invention will now be described with reference to the annexed drawings, provided as non-limiting example, in which:

- Figure 1 is a schematic representation of a navigation system according to the invention;
- Figure 2 is a schematic diagram illustrating the steps of a method performed by the system according to the invention;
- Figure 3 is a diagram of routes selected by the system according to the invention.

In brief, the proposed apparatus for providing navigation instructions in a motor vehicle comprises at least one processing module associated with memory means and user interface means, configured to supply navigation instructions on the basis of at least one road route between a first position and a second position, selected from among one or more routes constructed between the first and the second position selecting road route segments stored in the memory means on the basis of a procedure for minimisation of a cost associated with the one or more routes, the memory means comprising stored road route parameters employable by the processing module to evaluate information on motor vehicle fuel or energy consumption associated with the one or more constructed routes. Such memory means storing the road route parameters in a database element comprising segments and/or points of road routes, consumption conditions associated with the segments and/or points and respective relative consumption penalisation factors, the processing module also being configured for constructing the at least one road route between a first position and a second position through a cost minimisation procedure that envisages selecting among the segments and/or points to construct the route according to a cost minimisation criteria determined for the corresponding consumption penalisation factors.

According to another aspect of the invention, the apparatus envisages calculating a motor vehicle fuel or energy consumption by calculating the relative consumptions for every corresponding segment or position selected, applying the extracted corresponding relative consumption penalisation factors to a reference consumption, as well as calculating the overall consumption of the constructed route as a function of said relative consumptions, summing said relative consumptions on the number of segments and positions extracted.

According to another inventive aspect, the database, preferably of the cartographic type normally used in navigation systems, stores representative consumption conditions of vehicle manoeuvring parameters and in particular comprising one or more among:

traffic light positions,

right of way conditions,
roundabouts,
intersections,
speed limits,
the curvature radius of curves,
grade.

According another inventive aspect, the penalisation factors are expressed as penalisation percentages.

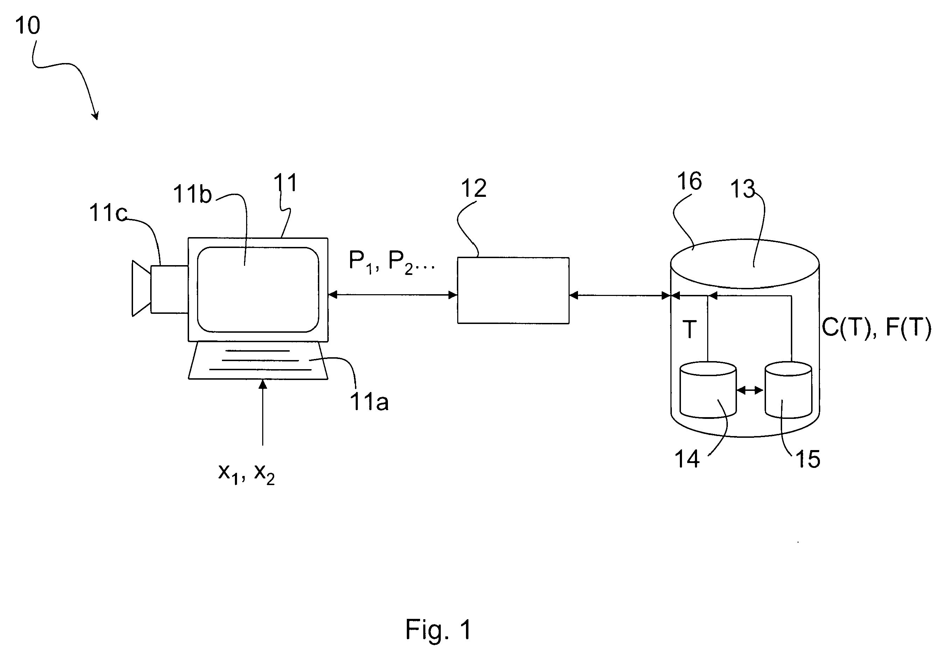

In figure 1 a schematic diagram is shown of the apparatus for providing navigation information according to the invention, indicated in its entirety with numerical reference 10.

Such apparatus for providing navigational information 10 comprises an processing module 12 associated for data exchange with a user interface module 11, comprising data entry means 11a, in the form of a keyboard in the example in figure 1, and a visualisation display 11b. Such user interface 11 also comprises an audio module 11c. A database module 13 in a memory module 16 is also provided, accessible at least for reading by the processing module 12.

Such database module 13 comprises a cartographic database 14 which is of known type and comprises files or records, relative to route segments T, or also to specific points on the route, that are comprised of mileage data and map data, also in cartographic form.

Such segments T correspond substantially to the arcs between nodes defined on a graph, in the context of a conventional graphic type representation of the map on which minimum path searching is applied.

According to an function itself known, the user can insert a first departure position $x_1$ and a second arrival position $x_2$ with the data entry means 11a, which could alternatively be voice actuated means. The processing module 12 receives such positions $x_1$ and $x_2$ and searches in the database module 13 for the data of the segments T most suitable for composing one or more routes P to propose to the user via the user interface module 11, according to a construction procedure and corresponding construction criteria that will be explained better below.

According to the invention, the database module 13 comprises a further consumption database sub-module 15, that is, a database element constituted of a data structure, for example a table or a file coordinated with the database 13, that is associated in an ordered way to the relevant records for segments T, storing consumption conditions C(T) for each segment T representative of vehicle manoeuvring parameters and in particular comprising one or more among:

traffic lights positions,
right of way conditions,
roundabouts,
intersections,
speed limits,
curvature radius of curves,
grade.

A consumption penalisation factor F(T) is inserted in such consumption database sub-module 15, in the records relative to a segment T and to the relative consumption condition C(T). Such penalisation factor F(T) expresses consumption penalisations in relative terms. For example, if the consumption condition for an $i^{th}$ segment $T_i$ used to construct the route P corresponds to a "5% uphill grade", a corresponding consumption penalisation factor $F(T_i)$ could be +20%, by this meaning that, for such $i^{th}$ segment a 20% increase must be calculated with respect to reference motion conditions, in particular to reference conditions of speed, that is, to a reference speed $Vref_i$, that is free or little influenced by consumption penalisation, for example, constant speed of 25km/h driving strait ahead.

Preferably, the consumption penalisation factor can be applied to a distance $d_i$ of the segment $T_i$, to obtain an equivalent distance $d_{eqi}$.

$$d_{eqi} = d_i * F(T_i) \qquad\qquad (1)$$

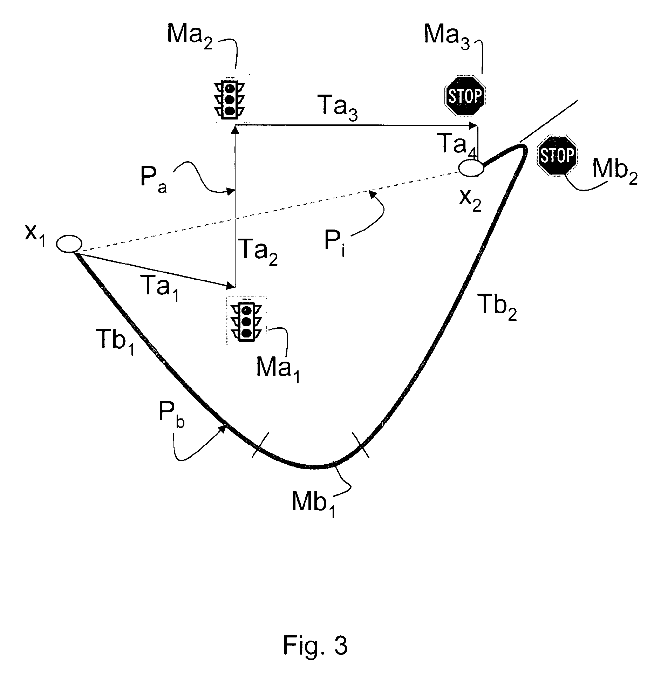

Such equivalent distance $d_{eqi}$ is thus elongated proportionally to the penalisation factor $F(T_i)$ representing a cost in terms of consumption for the $i^{th}$ segment $T_i$. The penalisation factor $F(T_i)$ represents a percentage or rate of penalisation, which therefore can naturally be expressed also as a penalisation rate with respect to a normalised value, e.g. $F(T_i)=20\%$ corresponding to a rate of 1.2. This will be better detailed later in the present description with reference to Table 1 and to Figure 3.

With reference to the distance $d_{eqi}$ it is not necessary to calculate an effective consumption of the vehicle. However, it is possible to express a relation similar to (1) in terms of consumption. In other words, for the $i^{th}$ segment $T_i$

that is part of route P, the relative energy or fuel consumption $B_i$ is:

$$B_i = F(T_i) * Bref_i \qquad\qquad (2)$$

where $F(T_i)$ indicates the penalisation factor of the $i^{th}$ segment $T_i$ and $Bref_i$ the reference consumption for the $i^{th}$ segment $T_i$.

The reference consumption $Bref_i$ for the segment is also evaluated in a reference condition of motion, in particular in conditions of reference speed, free or little influenced by consumption penalisation. The reference consumption $Bref_i$ for the $i^{th}$ segment $T_i$ is therefore the reference consumption Bref proportioned to the mileage of the segment $T_i$. As was said, such relative consumptions $B_i$ can possibly be calculated, applying the respective penalisation factors $F(T_i)$ according to the previous relation (2), however, according to a preferred aspect of the method of the invention, it is envisaged, for the construction of the route P, to take into consideration only such penalisation factors $F(T_i)$ without considering of the resulting effective consumption value, with the aim of avoiding possible parameters that could influence the effective consumption value, such as tyre pressure.

To a same segment $T_i$ more consumption conditions $C(T_i)$ and more penalisation factors $F(T_i)$ can possibly be applied, which may be contained in the consumption database sub-module 15 in relation to a same record of segment $T_i$. In such case the expression of the relative consumption $B_i$ for the segment $T_i$ provides the application of more penalisation factors $F(T_i)$ to the reference consumption $Bref_i$ of the $i^{th}$ segment $T_i$.

Therefore, the processing module 12 envisages the construction of a route P that will be composed from a summing of $i^{th}$ segments $T_i$ selected according to a criteria oriented to the manoeuvres and to the consumption deriving from them.

Such construction operation is in fact executed substantially by selecting from the available segments $T_i$ the segments $T_i$ associated with the lowest relative consumption penalisation factors. In other words, with reference to route construction operations of known type, such as, for example, the Dijkstra algorithm, in which route search algorithms select segments $T_i$, minimising costs on the arcs such as the travelling distance or travelling time, the apparatus according to the invention envisages selecting the segments $T_i$ using as the costs of the segments the consumption penalisation factor $F(T_i)$ determined by the associated consumption conditions $C(T_i)$, or quantities that are functions of these factors such as equivalent distance $d_{eq}$, calculated for example according to relation (1) or the relative fuel or energy consumption $B_i$ calculated for example according to relation (2). Naturally optimal route search algorithms can be the same or similar to those used to minimise travelling distance or time, where the cost function of each segment $T_i$, that is, the equivalent arc of the graph, is represented by one or more penalisation factors $F(T_i)$ .

After having constructed the route (P) in this way it is possible, from the $i^{th}$ segments extracted $T_i$, to obtain for example the relative consumptions $B_i$, according to what is indicated above. Therefore, it is possible to estimate a total consumption B of the selected route P, which is given by the sum of such relative consumptions $B_i$.

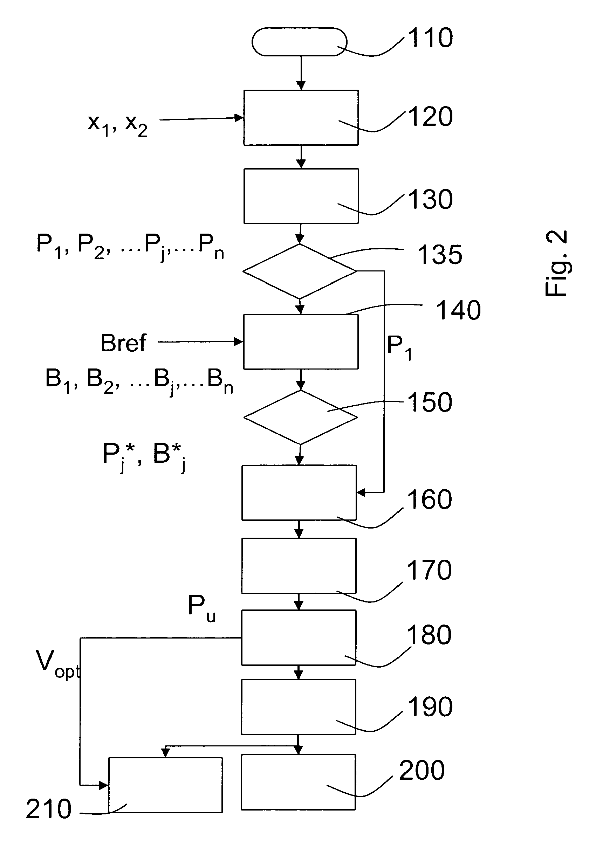

Figure 2 shows a flow diagram exemplifying a possible method for supplying navigation information in the context of the apparatus according to the invention.

In such figure 110 indicates a method start step, followed by an input step 120 of the first departure position $x_1$ and of the second arrival position $x_2$ by the user. Such positions $x_1$ and $x_2$ are used by the processing module 12 to execute a construction operation 130 of n routes $P_1, P_2, ..., P_j, ... P_n$, compatible with such first departure position $x_1$ and second arrival position $x_2$. "j" indicates an integer number index varying over the the n routes. Such construction step 130 of n routes is carried out interacting with the database module 13 as described relative to figure 1, that is, it is executed substantially selecting from among the available segments $T_i$ the segments $T_i$ associated with relative consumption penalisation factors $F(T_i)$ that minimise a consumption cost function in the context of a minimum route search procedure, that is, a minimisation procedure of a cost associated with such routes, wherein the cost is represented by the consumption penalisation factor $F(T_i)$. It is clear that there could be more than one route $P_1, P_2, ..., P_j, ... P_n$, compatible with such first departure position $x_1$ and second arrival position $x_2$, in particular if the minimum condition is defined within a range of variation, or if, in addition, the construction operation provides the evaluation also of costs in terms of distance and travelling time of the segments $T_i$ according to corresponding weights. For example, prior to or after the input step 120 of the first departure position $x_1$ and the second arrival position $x_2$ on the user interface module 11 it will be possible to display the request for selecting among different cost minimisation procedures for the construction of the route, for example:

- minimisation of the travelling distance;
- minimisation of travelling time;
- minimisation of consumption;
- minimisation of a cost based on a weighted combination of distance travelled, travelling time and consumption.

It is clear that in the field of navigation systems, the minimisation operation or minimum route search does not necessarily lead to the identification of a unique minimum route, associated for example with an absolute minimum, but as already mentioned, the result of the minimisation procedure can identify multiple routes compatible with the parameters defined for the minimum route search. However, the construction step 130 can envisage the provision of just the optimum route from the point of view of consumption. Thus, 135 indicates a test step that verifies whether the index n is equal to 1 and directly provides the only $P_1$ route to a visualisation step 160 detailed below.

Then, in a successive consumption calculation step 140, the n consumptions $B_1$, $B_2$, ... , $B_j$, ... $B_n$ associated with the routes $P_1$. $P_2$, ..., $P_j$, ... $P_n$, are calculated. For such consumption calculation step 140 the reference consumption value Bref is provided and for example, relation (1) discussed previously with reference to figure 1, is used. Such step 140 may also not be performed if, for example, only the optimal route is provided, and/or an estimate of vehicle consumption in terms of the amount of fuel and/or electric charge is not provided. Note that the embodiment of the method exemplified by the diagram in Figure 2 refers to the $B_i$ consumptions, but could analogously refer to equivalent distances $d_{eqi}$ or to other quantities derived from the penalisation factors. Successively, an optional step 150 may be performed to verify whether one or more of the consumptions $B_1$, $B_2$, ..., $B_j$, ... $B_n$, are greater than a maximum consumption value $B_{max}$ corresponding to the residual amount of fuel or energy charge of the motor vehicle. A set of routes P*j and consumptions B*j, greater or equal to such maximum consumption value $B_{max}$, is then selected, which is visualised in a visualisation step 160 on the user interface module 11 to allow the user to select a preferred route $P_u$ in a selection step 170. Such preferred route $P_u$ coincides with the only optimal route, if in the construction step 130 only the optimum route from the point of view of consumption is provided or in any case n=1 occurs in the test step 135. The preferred route $P_u$ being known, an optimal speed calculation step 180 is performed, which calculates the optimal speeds $V_{opt}$ suitable for travelling the $T_i$ segments, maintaining within predetermined variation ranges, that is, maximum and minimum values for the relative consumptions $B_i$. Such variation ranges can be stored in the database 12. A vehicle initiation step is then signalled 190 and thus the vehicle is put into conditions of motion. While in motion, such vehicle initiation step 190 is followed by a navigation N indications signalling step 200 through the user interface module 11 so to follow the preferred route $P_u$, according to the known mode of use of the apparatus for providing navigation information 10, as well as by a step 210 signalling the optimal speed $V_{opt}$ for the segment $T_i$ of the preferred route $P_u$ travelled in that moment by the vehicle.

Figure 3 represents a route diagram of further illustrating the operation of the apparatus according to the invention.

In such diagram, the first departure position $x_1$ and a second arrival position $x_2$ are indicated, connected by an ideal route $P_i$ that is, substantially the straight-line route, to which a route distance, for example 20 km, and an ideal travelling speed, for example 55 km/h are associated.

Then, figure 3 shows two routes constructed according to construction step 130, respectively a first route $P_a$ and a second route $P_b$.

The first route $P_a$ comprises:

- a segment $Ta_1$ of 8 km, associated with an optimal speed of 28 km/h;
- a road route point $Ma_1$ representative of a traffic light with a 40 second mean waiting time;
- a segment $Ta_2$ of 8 km, associated with an optimal speed of 18 km/h;
- a road route point $Ma_2$ representative of a traffic light with a 20 second mean waiting time;
- a segment $Ta_3$ of 15 km, associated with an optimal speed of 30 km/h;
- a road route point $Ma_3$ representative of a stop sign with a 10 second mean waiting time;
- a segment $Ta_4$ of 1 km, associated with an optimal speed of 14 km/h.

The second route $P_b$ comprises:

- a segment $Tb_1$ of 42 km, associated with an optimal speed of 80 km/h;
- a road route point $Mb_1$ representative of a 1 km curve;
- a segment $Tb2$ of 1 km, associated with a mean speed of 18 km/h;
- a road route point $Mb_2$ representative of a stop sign with a 10 second mean waiting time.

For convenience of description, the segments $Ta_1$... $Ta_4$ are distinguished herein from the route points $Ma_1$... $Ma_3$ with different symbols, which however are collectively part of a set of segment and/or route points $T_i$ as previously indicated.

Note that the optimal speeds may be a function of the day and time of travelling, for example, they could be the optimal speeds calculated for Tuesday at 2:00 pm.

In table 1 below the attribution of the penalisation factors $F(T_i)$ for the first route $P_a$ is indicated. In the first row the values relative to the ideal route $P_i$ are indicated for comparison.

**Table 1: Segments and route points of the first route $P_a$**

| $T_i$ | Vref (Km/h) | d (Km) | $F(T_i)$ | $d_{eq}$ (Km) |
|---|---|---|---|---|
| $P_i$ | 55 | 20 | 1 | 20 |
| $Ta_1$ | 28 | 8 | 1.3 | 10.40 |
| $Ta_2$ | 8 | 18 | 1.4 | 11.20 |
| $Ta_3$ | 15 | 30 | 1.1 | 16 |
| $Ta_4$ | 1 | 14 | 1.4 | 1.40 |
| $Ma_1$ | 0 | 0.91667 | 1 | 0.92 |
| $Ma_2$ | 0 | 0.61111 | 1 | 0.61 |
| $Ma_3$ | 0 | 0.22917 | 1 | 0.23 |
| | | | | |
| Total | | 33.7569 | | 41.26 |

In table 2 below the attribution of the penalisation factors $F(T_i)$ for the second route $P_b$ is indicated. In the first row the values relative to the ideal route $P_i$ are indicated for comparison.

**Table 2: Segments and route points of the second route $P_b$**

| $T_i$ | Vref (Km/h) | d (Km) | $F(T_i)$ | $d_{eq}$ (Km) |
|---|---|---|---|---|
| $P_i$ | 55 | 20 | 1 | 20 |
| $Tb_1$ | 80 | 41 | 1.2 | 50.40 |
| $Tb_2$ | 18 | 1 | 1.4 | 1.4 |
| $Mb_1$ | 0 | 1 | 2 | 2 |
| $Mb_2$ | 0 | 0.22917 | 1 | 0.23 |
| Total | | 45.2292 | | 54.03 |

Therefore, as can be inferred from tables 1 and 2, for each segment $T_i$ a corresponding reference speed $Vref_i$ is indicated, representative of a reference condition of motion and the relative penalisation factor $F(T_i)$. The distance or length of the segment $T_i$ is indicated with $d_i$.

The method envisages the calculation of an equivalent distance $d_{eqi}$ of each segment $T_i$ according to the relation $d_{eqi}=d_i*F(T_i)$ already described, so that an evaluation of the total equivalent distance $d_{eq}$ on the first route $P_a$ or the second route $P_b$ allows a rapid comparison for evaluating which route is the most convenient from the point of view of consumption.

The example provided with reference to tables 1 and 2 and to the diagram of figure 3 highlights how it is not necessary to calculate the actual consumptions, though these can be arrived at by means of relation (2).

Also note that in the tables the route points $Ma_1$... $Ma_3$, $Mb_2$, although affecting the manoeuvring and consumptions, being points, do not have associated distances, they are parameterised in part by attributing to them a fictitious distance $d_i$ and in this case setting the corresponding penalisation factor $F(T_i)$ to 1. In other words, in this case the information on consumption is entirely input in the attribution of a fictitious distance value. For this purpose, the influence of the different road route points on consumption can be estimated according to different models, for example the road route point $Ma_1$ representative of a traffic light with a 40 second average wait, is counted with a fictitious distance of 0.91667, that is to say, a rather long distance since, as is known, stopping and restarting at traffic lights notably affect consumption.

However, in the context of relation (1), for the calculation of the equivalent distance $d_{eqi}$ it is provided to weigh the information on consumption for the route points by means of penalisation factors. At the road route point $Mb_1$ representative of a 1 km turn, the real distance of 1 km is attributed, but the corresponding penalisation factor $F(T_i)$ is 2, to take into consideration the deceleration and acceleration in travelling through the curve.

Naturally, for the point consumptions it is also possible to distribute the consumption information, in part in the assignment of a fictitious distance $d_i$ and in part in the assignment of a penalisation factor $F(T_i)$.

Concerning the routes $P_a$ and $P_b$ in Figure 3, it must be specified that such example serves to exemplify the association and use of penalisation factors and the effect on total consumptions/penalisations, but that the routes $P_a$ and $P_b$ shown in Figure 3 are, in themselves, already the products of the construction operation 130, which can adopt the equivalent distances $d_{eqi}$ as costs of the corresponding segments $T_i$ in the context of a route search algorithm.

Therefore, the advantages of the proposed solution are clear.

The apparatus according to the invention advantageously constructs the route between two indicated positions, not only in function of space and time, successively calculating the consumption of the obtained routes, but also or only in function of the consumption associated with the elementary route segments memorised in the database. Advantageously, the route is optimised in function of the manoeuvres and of consumptions and could be different from the routes considered by a navigating apparatus of known type, which optimises the space and time and, therefore, the apparatus according to the invention could possibly construct a route with lower consumption with respect to the other, known apparatuses.

According to another advantageous aspect of the apparatus according to the invention, the construction operation is not necessarily performed in function of the consumptions associated with the elementary route segments, but in function of consumption penalisation factors, in particular of penalisation percentages. This allows avoiding of factors that are difficult to weigh in the construction of the route with the aim of determining a consumption in terms of amount of fuel or energy involved in a route segment.

Naturally, without prejudice to the underlying principle of the invention, the details and the embodiments may vary widely with reference to what has been described and illustrated by way of example only, without departing from the scope of the present invention.

Naturally, the method steps in figure 2 must be intended as illustrative and non-limiting of the method according to the invention, and may vary in the embodiment, for example, in the way that penalisation factors are applied to the corresponding segments, and not all of the steps illustrated are to be considered indispensable and in general such steps may be selected and arranged independently, as well as variously implemented in the context of a method as claimed.

For example, as mentioned previously, the preferred route selection step could be performed automatically by the processing module, which will directly propose the route optimised for fuel consumption to the user, possibly showing also the other routes as optional selections.

Analogously, the structure of the navigation apparatus could be different from the one illustrated, employing different processing modules and databases, concentrated or distributed, as well as any suitable user interface module, in the context of an apparatus as claimed.

Note also that the consumption database sub-module has been exemplified as a separate database module for convenience of illustration, but could be directly part of the cartographic database, or coordinated to it by different data ordering structures, provided that an association between the segment of a route and the manoeuvring parameters, such as the consumption conditions and the penalisation factors is maintained, as claimed.

**Claims**

1. An apparatus for providing navigation instructions in a motor vehicle, comprising at least one processing module (12) associated with memory means (16) and user interface means (11) configured to supply said navigation instructions (N) on the basis of at least one road route ($P$; $P_1$... $P_n$; $P_u$) between a first position ($x_1$) and a second position ($x_2$) selected from among one or more routes ($P$; $P_1$... $P_n$; $P_u$) constructed between said first position ($x_1$) and second position ($x_2$) selecting road route segments ($T_i$) stored in said memory means (16) based on a minimisation procedure of a cost associated with said one or more routes ($P$; $P_1$... $P_n$; $P_u$), said memory means (16) comprising stored road route parameters (C, F) usable by said processing module (12) to evaluate information on motor vehicle fuel or energy consumption associated with said one or more constructed routes ($P$; $P_1$... $P_n$; $P_u$), **characterised in that**
said memory means (16) store said road route parameters (C, F) in a database element (13, 14, 15) comprising road route segments or points ($T_i$), consumption conditions ($C(T_i)$) associated with said segments or points ($T_i$) and respective corresponding consumption penalisation factors ($F(T_i)$),
said processing module (12) being configured to construct said at least one road route ($P$; $P_1$... $P_n$; $P_u$) between a first position ($x_1$) and a second position ($x_2$) by means of a cost minimisation procedure that envisages selecting from among said segments or points ($T_i$) in said database element (13, 14, 15) the segments or points to construct the road route (($P$; $P_1$... $P_n$; $P_u$) minimising a cost ($d_{eqi}$, $B_i$) determined by the corresponding consumption penalisation factors ($F(T_i)$).

2. The apparatus according to claim 1, **characterised in that** it is configured to estimate said penalisation factors (F

($T_i$)) with respect to corresponding reference motion conditions based on parameters including reference speed conditions (Vref).

3. The apparatus according to claim 1 or 2, **characterised in that** said database (13, 14, 15) is configured to memorise said penalisation factors ($F(T_i)$) in the form of penalisation percentages or penalisation rates.

4. The apparatus according to claim 1 or 2 or 3, **characterised in that** said cost to be minimised is an equivalent distance ($d_{eqi}$) or a fuel consumption ($B_i$) respectively calculated based on corresponding consumption penalisation factors ($F(T_i)$).

5. The apparatus according to one or more of the claims from 1 to 4, **characterised in that** said processing module (12) is configured to calculate the motor vehicle fuel or energy consumption ($B; B_1... B_n; B_u$) by the calculation of relative consumptions for each corresponding segment or position selected ($T_i$) applying the corresponding extracted relative consumption penalisation factors ($F(T_i)$) to a reference consumption (Bref) based on said reference motion condition;
to calculate the total consumption for the constructed route ($B; B_1... B_n; B_u$) in function of said relative consumptions ($B_i$), summing said relative consumptions on the number of extracted segments or positions.

6. The apparatus according to one or more of the previous claims, **characterised in that** said database (13, 14, 15) stores consumption conditions (C) associated with said segments or points (T) comprising one or more conditions among:

> traffic lights positions,
> right of way conditions,
> roundabouts,
> intersections,
> speed limits,
> curvature radius of curves,
> grade.

7. The apparatus according to one or more of the previous claims, **characterised in that** it is configured to construct (130) at least two road routes ($P_1... P_n$) between a first position and a second position, to calculate (140) the total consumption ($B_1... B_n$) of each of said at least two routes ($P_1... P_n$) constructed in function of said relative consumptions ($B_i$) associated with respective segments or points ($T_i$) of each of said at least two constructed routes ($P_1... P_n$), and to execute one or more of the following steps:

> compare and/or provide (150, 160) by means of said user interface module (11) the total consumption of said at least two identified routes.
> select (150) between said at least two identified routes ($P_1... P_n$) in function of a residual motor vehicle fuel or energy charge value ($B_{max}$).

8. The apparatus according to one or more of the previous claims, **characterised in that** said database (13, 14, 15) comprises a relative consumption variation range for a segment or point, said elaboration module 12 being configured to calculate an optimal speed ($V_{opt}$) to maintain the relative consumption ($B_i$) within said variation range and to command said user interface module (11) to signal (210) said optimal speed ($V_{opt}$) while in motion.

9. A method to supply navigation instructions in a motor vehicle, comprising the operations of providing said navigation instructions (N) on the basis of at least one road route ($P; P_1... P_n; P_u$) between a first position ($x_1$) and a second position ($x_2$) selected from among one or more routes ($P; P1... Pn; Pu$) constructed between said first position ($x_1$) and second position ($x_2$) selecting road route segments ($T_i$) stored in a database (16) based on a minimisation procedure of a cost associated with said one or more routes ($P; P_1... P_n; P_u$) and providing stored (16) road route parameters (C, F) usable to evaluate information on motor vehicle fuel or energy consumption associated with said one or more constructed routes ($P; P_1... P_n; P_u$),
**characterised in that**
said operation of providing stored (16) road route parameters (C, F) includes providing in a database element (13, 14, 15) comprising road route segments and/or points ($T_i$), consumption conditions ($C(T_i)$) associated with said segments or points ($T_i$) and respective corresponding consumption penalisation factors ($F(T_i)$),
constructing (130) said at least one road route ($P; P_1... P_n; P_u$) between a first position $x_1$ and a second position $x_2$

by means of a cost minimisation procedure that provides selecting among said segments or points ($T_i$) in said database element (13, 14, 15) the segments or points to construct the road route ($P$; $P_1$... $P_n$; $P_u$ minimising a cost determined by the corresponding consumption penalisation factors ($F(T_i)$).

10. The method according to claim 9, **characterised in** estimating said penalisation factors ($F(T_i)$) with respect to corresponding reference motion conditions based on parameters including reference speed conditions (Vref).

11. The method according to claim 9 or 10, **characterised in** storing penalisation factors ($F(T_i)$) in the form of penalisation percentages or rates.

12. The method according to claim 9 or 10 or 11, **characterised in that** said cost to be minimised is an equivalent distance ($d_{eqi}$) or a fuel consumption ($B_i$) respectively calculated based on corresponding consumption penalisation factors ($F(T_i)$).

13. The method according to one or more of the claims from 9 to 12, **characterised in that** said consumption conditions (C) associated with said segments or points ($T_i$) comprise one or more conditions among:

   traffic lights positions,
   right of way conditions,
   roundabouts,
   intersections,
   speed limits,
   curvature radius of curves,
   grade.

14. The method according to one or more of the claims from 9 to 13, **characterised in** calculating a motor vehicle fuel or energy consumption ($B$; $B_1$...$B_n$; $B_u$) by the calculation of the relative consumptions ($B_i$) for each corresponding segment or position selected ($T_i$) applying the corresponding extracted relative consumption penalisation factors ($F(T_i)$) to a reference consumption (Bref);
   calculating the total consumption of the constructed route ($B$; $B_1$...$B_n$; $B_u$) in function of said relative consumptions ($B_i$), summing said relative consumptions on the number of extracted segments or positions.

15. A method according to one or more of the claims from 9 to 14, **characterised in that** it comprises identifying at least two road routes ($P_1$... $P_n$) between a first position ($x_1$) and a second position ($x_2$), calculating (140) the total consumption of each of said at least two identified routes ($P_1$... $P_n$) in function of said relative consumptions ($B_i$) associated with corresponding segments or points ($T_i$) of each of said at least two identified routes ($P_1$... $P_n$), and executing one or more of the following steps:

   comparing (150) and/or providing (160) by means of a user interface module (11) the total consumption ($B_1$... $B_n$) of said at least two identified routes ($P_1$... $P_n$) .
   Selecting between said at least two routes ($P_1$... $P_n$) identified in function of a residual motor vehicle fuel or energy charge value ($B_{max}$).

16. The method according to one or more of the claims from 9 to 15, **characterised by** comprising the operation of setting in said database (13, 14, 15) a variation range of the relative consumption of a segment or point, calculating (180) an optimal speed ($V_{opt}$) to maintain the relative consumption within said variation range, signalling (210) said optimal speed ($V_{opt}$) to the user while in motion.

Fig. 1

Fig. 2

Fig. 3

EP 2 136 183 A1

Europäisches
Patentamt

European
Patent Office

Office européen
des brevets

**EUROPEAN SEARCH REPORT**

Application Number

EP 08 42 5427

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 5 913 917 A (MURPHY MICHAEL D [US])<br>22 June 1999 (1999-06-22)<br>* column 1, line 66 - column 2, line 6;<br>figures 1,5 *<br>* column 3, line 14 - line 21 *<br>* column 8, line 42 - line 47 *<br>* column 11, line 35 - line 40 *<br>* column 11, line 57 - line 62 *<br>* column 11, line 67 *<br>* column 12, line 8 - line 14 *<br>* column 15, line 60 - column 16, line 22<br>*<br><br>* claim 1 *<br>* column 3, line 25 *<br>* column 3, line 40 - line 45 *<br>* column 5, line 56 - column 6, line 2 *<br>* column 6, line 50 *<br>* column 6, line 62 - line 67 *<br>----- | 1-7,9-15<br><br>8,16 | INV.<br>G01C21/34<br>G08G1/0969 |
| X | WO 2008/037768 A (MICHELIN SOC TECH [FR];<br>RAYNAUD MICHEL [FR]; LEGRAND CHRISTOPHE<br>[FR]) 3 April 2008 (2008-04-03)<br>* paragraphs [0020], [0021], [0052],<br>[0053], [0060]; claim 1 *<br>----- | 1-16 | TECHNICAL FIELDS SEARCHED (IPC)<br><br>G01C<br>G08G |
| X | US 6 005 494 A (SCHRAMM SCOTT W [US])<br>21 December 1999 (1999-12-21)<br>* column 4, line 22 - line 28 *<br>* column 5, line 40 - column 6, line 2 *<br>* column 6, line 32 - line 43 *<br>* column 7, line 13 - line 23 *<br>----- | 1-16 | |
| Y | DE 101 41 805 A1 (KRAIS MARTIN [DE])<br>2 May 2002 (2002-05-02)<br>* claim 1 *<br>----- | 8,16 | |
| A | JP 2000 002553 A (HINO MOTORS LTD)<br>7 January 2000 (2000-01-07)<br>* abstract *<br>----- | 1-16 | |

The present search report has been drawn up for all claims

| Place of search | Date of completion of the search | Examiner |
|---|---|---|
| The Hague | 18 December 2008 | Hunt, Joke |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 2 136 183 A1**

## ANNEX TO THE EUROPEAN SEARCH REPORT
## ON EUROPEAN PATENT APPLICATION NO.

EP 08 42 5427

This annex lists the patent family members relating to the patent documents cited in the above-mentioned European search report.
The members are as contained in the European Patent Office EDP file on
The European Patent Office is in no way liable for these particulars which are merely given for the purpose of information.

18-12-2008

| Patent document cited in search report | | Publication date | Patent family member(s) | | Publication date |
|---|---|---|---|---|---|
| US 5913917 | A | 22-06-1999 | NONE | | |
| WO 2008037768 | A | 03-04-2008 | FR | 2906608 A1 | 04-04-2008 |
| US 6005494 | A | 21-12-1999 | NONE | | |
| DE 10141805 | A1 | 02-05-2002 | NONE | | |
| JP 2000002553 | A | 07-01-2000 | NONE | | |

EPO FORM P0459

For more details about this annex : see Official Journal of the European Patent Office, No. 12/82